# DEMANDE DE BREVET EUROPEEN

(11) **EP 4 756 135 A1**
(43) Date de publication de la demande: **10.06.2026**
(21) Numéro de dépôt: 25220201.5
(22) Date de dépôt: 02.12.2025
(51) Int. Cl.: E02F 9/24, B60R 25/00, G05G 5/28

(54) **SYSTEME DE SECURITE CONTRE LE VOL POUR ENGINS DE CHANTIER TYPE PELLES MECANIQUE ET MINIPELLE MECANIQUE**

(30) Priorité: 03.12.2024 FR 2413345
(71) Demandeur: Oltra, Pascal, 38790 Saint-Georges-d'Espéranche (FR); Kaarouche, Kévin, 42800 Rive de Gier (FR)
(72) Inventeur: OLTRA, Pascal, 38790 Saint-Georges-d'Espéranche (FR); KAAROUCHE, Kévin, 42800 Rive de Gier (FR); DEVEZE, Alain, 69560 Saint Romain en Gal (FR)
(74) Mandataire: Ipsilon

(57) **Abrégé**

L'invention concerne un système de protection contre le vol pour engins de chantier, caractérisé en ce qu'il comprend au moins deux manchons (1Ma, 1Mp) destinés à être fixés sur des leviers de commandes de translation (LcG, LcD) d'un engin de chantier type minipelle mécanique ou pelle mécanique ; des moyens de fixation des manchons comprenant au moins une vis pointeau (Vp) destinées à être en contact avec les leviers de commandes de translation pour rendre les manchons solidaires desdits leviers ; des moyens de verrouillage reliant les manchons entre eux pour maintenir les leviers de commandes de translation en position maximum écartée.

## Description

### Domaine technique

La présente invention concerne un système de protection contre le vol, positionnable et fixable sur tous types de leviers de commandes de translation des engins de chantier et de manutention, type minipelle mécanique et pelle mécanique, rendant les leviers totalement solidaires entre eux et immobilisant ainsi l'engin de chantier de tout déplacement. L'invention concerne plus particulièrement un antivol d'engins de chantier et de manutention, type minipelle mécanique et pelle mécanique.

### Technique antérieure

Un engin de chantier comprend généralement deux leviers de commande permettant le mouvement en translation de l'engin vers l'avant et vers l'arrière, et donc le déplacement de ce dernier. On peut considérer un levier de commande en translation droit et un levier de commande en translation gauche, qui sont agencés à proximité l'un de l'autre et qui comprennent une tige s'étendant depuis le plancher de l'engin, terminée par un pommeau.

Le vol d'engins de chantier, et surtout de pelles mécaniques et de minipelles mécaniques, est important et les systèmes actuels ne suffisent pas à limiter ces actes de malveillance. À ce jour, des systèmes contre le vol existent mais sont difficilement exploitables en lien avec un environnement comportant entre autres sur un chantier de la boue, de l'humidité, du froid, etc.

On connaît des solutions contre le vol, comme dans la demande de brevet US2003167807A1. Ce document décrit un dispositif antivol pour excavatrice qui limite le mouvement des leviers de commande en translation. Le verrou comprend un corps principal et une plaque de verrouillage.

La solution du document US2003167807A1 permet de verrouiller les leviers de commande en translation d'une pelle mécanique, d'une minipelle mécanique, ou de tout autre engin de chantier. Toutefois, cette solution n'offre pas un niveau de sécurité élevé.

Par exemple, le système peut être retiré par le haut en démontant les pommeaux des leviers de commande, donnant ainsi un accès total aux leviers de commandes de translation. De plus, cette solution utilise une serrure, ce qui limite les possibilités de changement de clé.

Il est donc recherché une solution permettant d'immobiliser un engin de chantier en verrouillant les leviers de commande de manière plus robuste et plus sûre que dans les solutions proposées de l'art antérieur.

### Exposé de l'invention

Le dispositif selon l'invention comprend un assemblage de pièces fixables sur les leviers de commandes en translation des engins de chantier et engins de manutention, type minipelle mécanique et pelle mécanique. Le dispositif est verrouillable par un cadenas.

Selon un premier aspect, l'invention concerne un système de protection contre le vol pour engins de chantier comprend au moins deux manchons destinés à être fixés sur des leviers de commandes de translation d'un engin de chantier type minipelle mécanique ou pelle mécanique, des moyens de fixation des manchons comprenant au moins une vis pointeau destinée être en contact avec les leviers de commandes de translation pour rendre les manchons solidaires desdits leviers, et des moyens de verrouillage reliant les manchons entre eux pour maintenir les leviers de commandes de translation en position maximum écartée. Cette configuration permet d'immobiliser efficacement l'engin en bloquant les leviers de commande dans une position qui ne permet que des mouvements circulaires sur place, rendant le vol pratiquement impossible.

Avantageusement, les vis pointeau pénètrent dans les leviers de commande afin de mieux immobiliser le système.

Selon un mode de réalisation, les moyens de verrouillage comprennent un loquet destiné à coopérer avec un manchon pivot et un manchon avec anneau. Cette première solution technique offre une mise en œuvre simple et rapide du système antivol avec un nombre réduit de composants.

Selon un mode de réalisation, le loquet est mobile en rotation et comprend un crochet destiné à s'engager sur un axe du manchon pivot. Cette caractéristique assure un verrouillage sécurisé et empêche le retrait du loquet sans détérioration importante du système.

Selon un mode de réalisation, les moyens de verrouillage comprennent un verrou composé d'un volet fendu et d'un volet avec anneau reliés par une charnière. Cette seconde solution technique propose une alternative robuste avec une conception articulée facilitant la manipulation.

Selon un mode de réalisation, les volets sont configurés pour entourer les manchons fixés sur les leviers de commandes de translation. Cette configuration permet un emprisonnement complet des leviers et des manchons, renforçant la sécurité du système.

Selon un mode de réalisation, les moyens de verrouillage sont verrouillables par un cadenas. Le cadenas permet à l'utilisateur de choisir son propre système de clé et de le changer facilement.

Selon un mode de réalisation, les manchons présentent une forme cylindrique à deux diamètres différents, le diamètre intérieur le plus petit étant supérieur au plus gros diamètre de levier de commande de translation du marché. Cette conception assure une compatibilité universelle avec tous les types d'engins de chantier sans nécessiter d'adaptation spécifique.

Selon un mode de réalisation, les manchons comprennent trois vis pointeau par manchon pour assurer une meilleure coaxialité avec les leviers de commandes de translation. Cette caractéristique améliore la stabilité de fixation et empêche tout glissement des manchons même sous contrainte.

Selon un mode de réalisation, le système comprend en outre des tubes de sécurité destinés à être assemblés sur les leviers de commandes de translation pour protéger ceux-ci contre la découpe volontaire. Cette protection supplémentaire retarde considérablement les tentatives de vol par destruction des leviers de commande.

Avantageusement, le nombre de tubes peuvent constituer des repères de positionnement idéal pour les manchons sur les leviers de commande.

Selon un mode de réalisation, les tubes de sécurité comprennent un tube extérieur et un tube intérieur de longueurs différentes, le tube intérieur étant configuré pour tourner sur son axe lors d'une tentative de découpe. Ce mécanisme de protection passive ralentit grandement les tentatives de découpe à la disqueuse en faisant tourner le tube intérieur comme un engrenage.

Selon un mode de réalisation, les vis pointeau ne sont pas accessibles une fois le système assemblé et verrouillé, sans détérioration importante du système. Cette caractéristique empêche le démontage facile du système par les voleurs et renforce la sécurité globale.

Selon un deuxième aspect, l'invention concerne un engin de chantier type minipelle mécanique ou pelle mécanique qui comprend un système de protection contre le vol selon le premier aspect. Cette application directe permet de sécuriser efficacement les engins sur les chantiers contre les tentatives de vol.

### Brève description des dessins

Figures 1 est une vue en perspective de dessus du système selon un mode de réalisation de l'invention assemblé en mode sécurisation des leviers de commandes de translations, avec son cadenas.
Figures 2 est une vue en perspective de dessous du système de la figure 1 assemblé en mode sécurisation des leviers de commandes de translations avec son cadenas.
Figures 3 est une vue en éclatée du système de la figure 1 avec les mouvements d'assemblage du loquet et des leviers de commandes de translations.
Figures 4 est une vue en éclatée du système de la figure 1.
Figures 5 est une vue de côté gauche, en coupe du système de la figure 1 complétement assemblé.
Figures 6 est une vue de côté droit, en coupe du système de la figure 1 complétement assemblé.
Figures 7 est une vue en détail en coupe des leviers de commandes de translations et des tubes de sécurité du système de la figure 1.
Figures 8 est une vue en perspective de dessus du système selon un autre mode de réalisation de l'invention assemblé en mode sécurisation des leviers de commandes de translations, avec son cadenas.
Figures 9 est une vue en perspective de dessous du système de la figure 8 assemblé en mode sécurisation des leviers de commandes de translations, avec son cadenas.
Figures 10 est une vue avant en éclatée du système de la figure 8 montrant les volets ouverts et des leviers de commandes de translations.
Figures 11 est une vue arrière en éclatée du système de la figure 8 avec les volets ouverts et des leviers de commandes de translations.
Figures 12 est une vue en éclatée du système de la figure 8 montrant les mouvements d'assemblage des volets et des leviers de commandes de translations et des machons.
Figures 13 est une vue en détail, et en coupe du système de la figure 8 montrant un manchon sur un cintre d'un levier de commande de translation.
Figures 14 est une vue en détail, et en coupe du système de la figure 8 montrant passage un manchon sur un cintre d'un levier de commande de translation

### Description des modes de réalisation

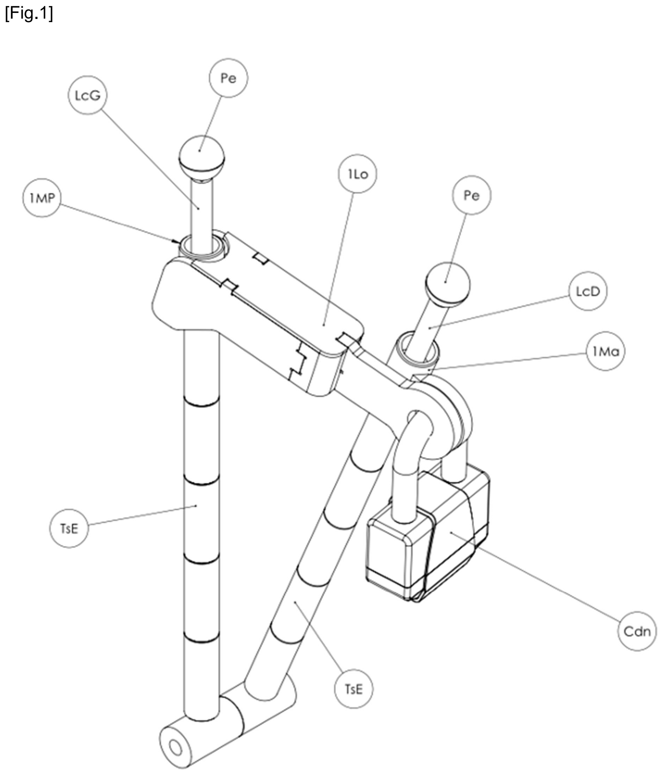

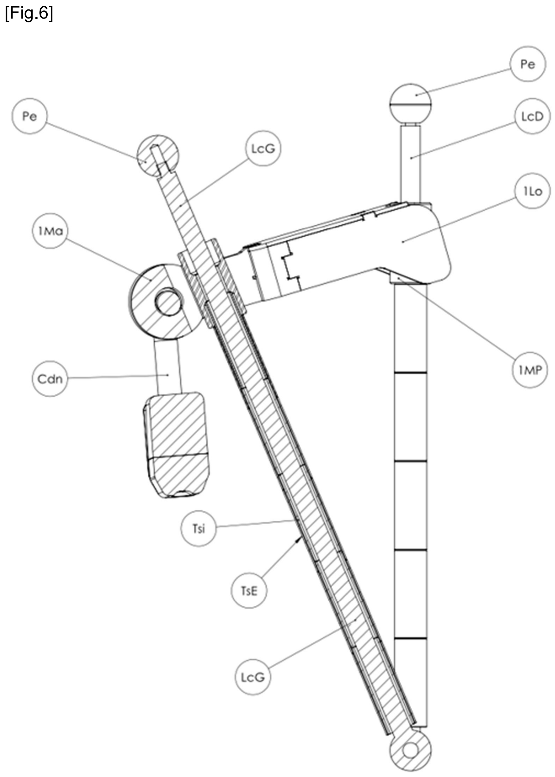

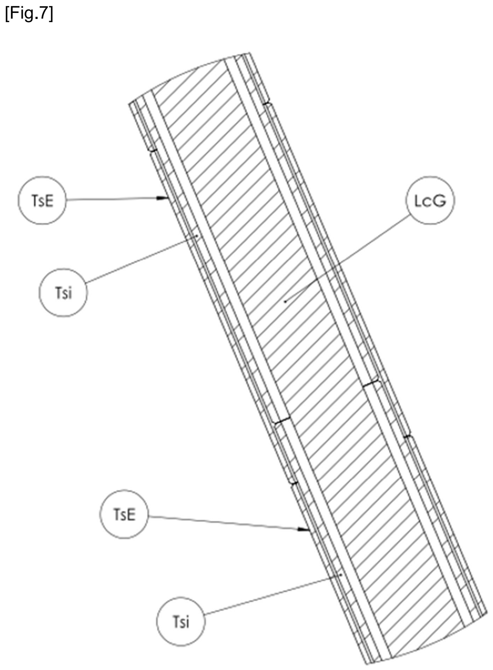

L'invention concerne un système composé de plusieurs éléments. Deux principaux modes de réalisation de ladite invention seront présentés de manière non limitative, en référence aux figures 1 à 14.

Le système de protection contre le vol pour engins de chantier comprend au moins deux manchons (1Ma, 1Mp, 2Ma) destinés à être fixés sur des leviers de commandes de translation (LcG, LcD) d'un engin de chantier type minipelle mécanique ou pelle mécanique ; des moyens de fixation des manchons comprenant au moins une vis pointeau (Vp) destinée à être en contact avec les leviers de commandes de translation pour rendre les manchons solidaires desdits leviers ; et des moyens de verrouillage reliant les manchons entre eux pour maintenir les leviers de commandes de translation en position maximum écartée.

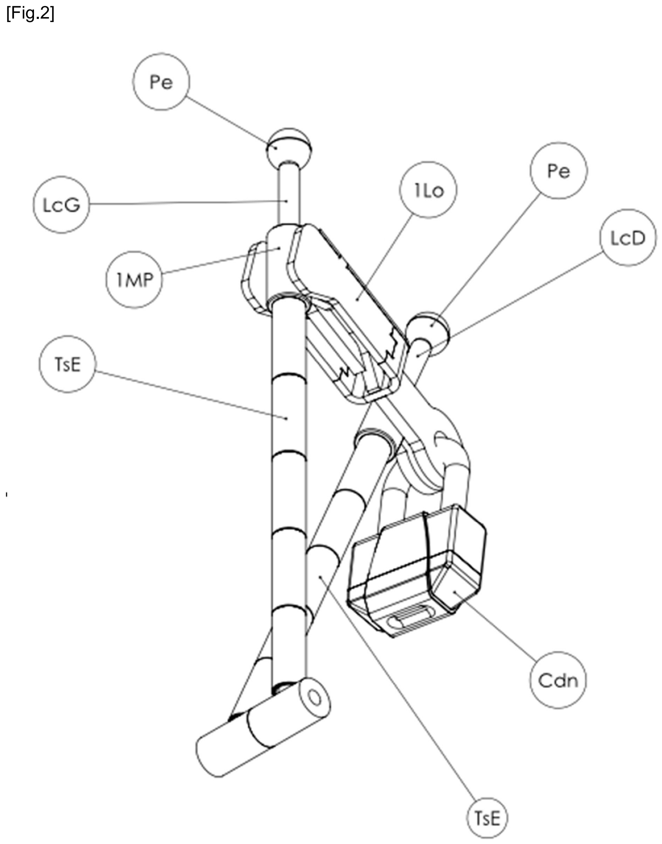

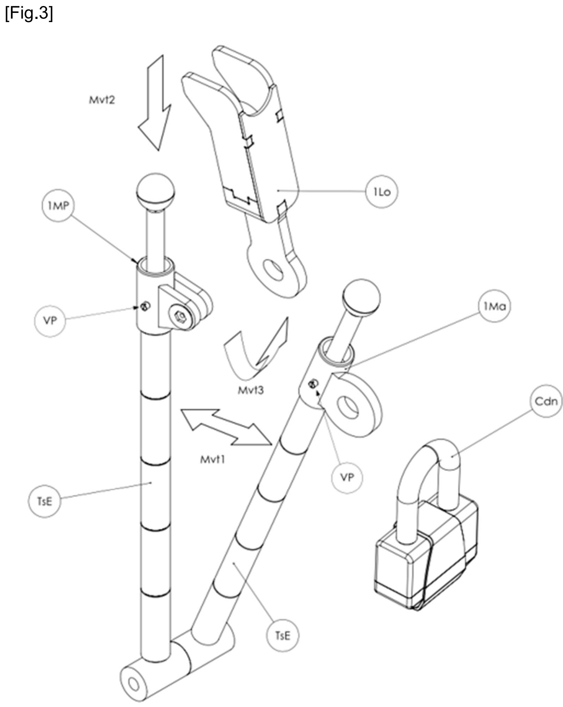

Les éléments d'un mode de réalisation sont composés d'un manchon avec anneau (1Ma), d'un manchon pivot (1Mp) et d'un loquet (1Lo), figures 1 et 2. Les manchons (1Ma) et (1Mp) sont équipés d'au moins une vis pointeau traversante (Vp), comme à la figure 3. Les manchons (1Ma) et (1Mp) peuvent être équipés, par exemple, de trois vis pointeau.

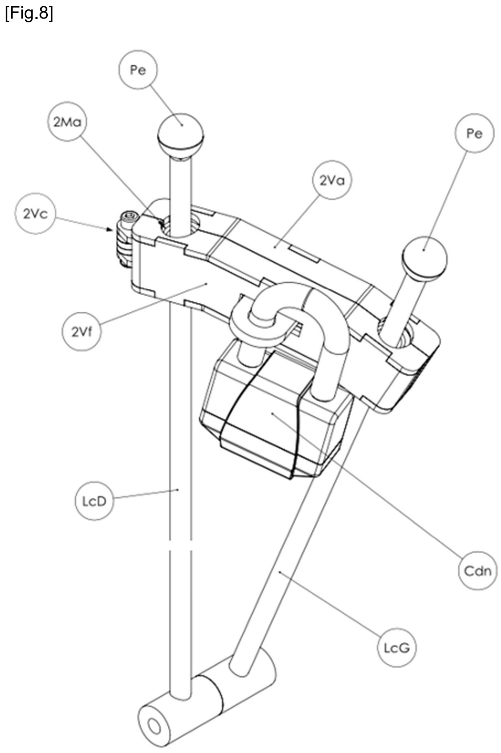

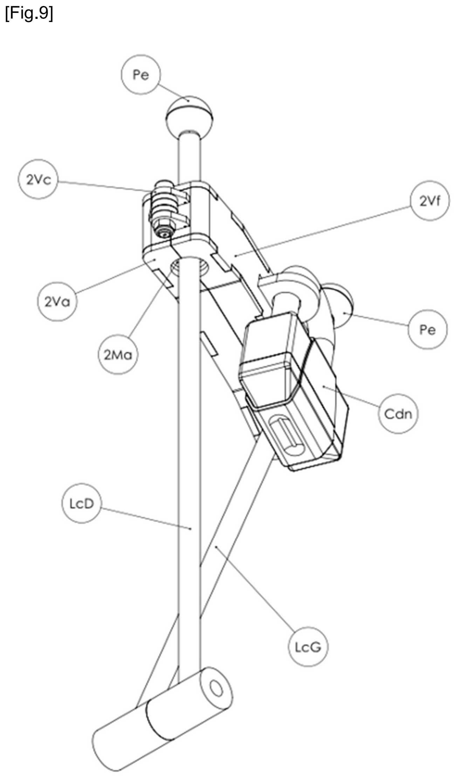

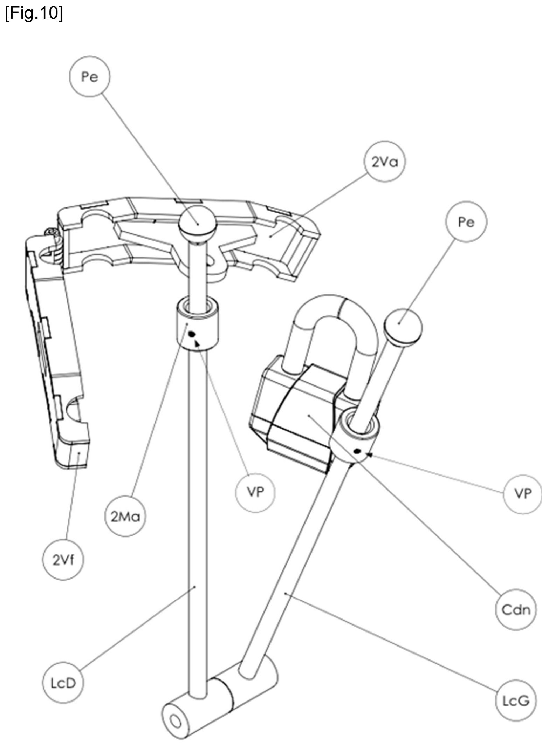

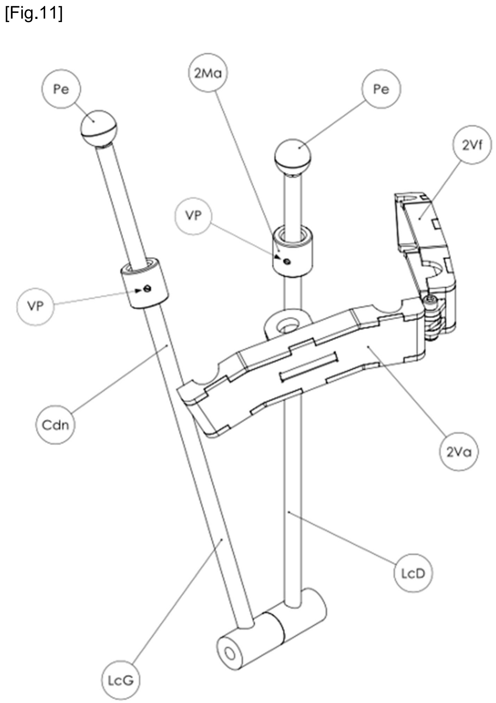

Les éléments du deuxième mode de réalisation sont composés de deux manchons (2Ma) avec trois vis pointeau traversantes (Vp) par manchon, figures 10 et 11, et d'un verrou (2V) composé d'un volet fendu (2Vf) et d'un volet avec un anneau (2Va), reliés par une charnière et son axe (2Vc), figures 8 et 9.

Ces deux modes de réalisation peuvent être combinés avec des tubes de sécurité (Tse) pour le tube extérieur et (Tsi) pour le tube intérieur, comme aux figures 3, 4, 6 et 7, qui protègent les leviers de commande de translation (LcG) et (LcD) de toute dégradation volontaire.

Ces systèmes, de par leur conception, bloquent les leviers de commandes de translation (LcG) et (LcD) en position maximum écartée, figures 3, 5, 6 et 12. Dans le cas d'une mise en fonctionnement de l'engin, type minipelle mécanique, qui a le système de protection contre le vol fixé à ses leviers de commandes de translation (LcG) et (LcD), l'engin type minipelle mécanique ne pourra ni avancer ni reculer, mais seulement tourner en rond sur place, dans un sens ou dans l'autre. Dans cette configuration, le vol ne peut pas s'exécuter facilement.

Le système selon invention bloque les leviers de commande de translation au maximum écartés, ce qui correspond à un mouvement en cercle du véhicule. En cas de vol, l'engin ne peut alors que tourner sur place, limitant grandement le champ d'action des voleurs.

Un premier mode de réalisation de ladite invention pourrait être conçu de la façon suivante : le loquet (1Lo) pourrait être réalisé en acier dur, afin d'être plus difficile à découper avec une disqueuse ou tout autre moyen de découpe portatif utilisé par le voleur. Les manchons (1Ma) et (1Mp) peuvent également être réalisés en acier pour les mêmes raisons que le loquet (1Lo).

Un deuxième mode de réalisation de ladite invention pourrait être conçu de la façon suivante : les volets (2Vf) et (2Va) pourraient être réalisés en acier dur, afin d'être plus difficiles à découper avec une disqueuse ou tout autre moyen de découpe portatif utilisé par le voleur. Les manchons (2Ma) peuvent rester en acier doux, car ceux-ci ne sont pas accessibles sans détérioration importante des volets (2Va) et (2Vf).

Les volets (2Va) et (2Vf) du deuxième mode de réalisation de l'invention sont articulés par une charnière (2Vac), figure 9, assurant ainsi le guidage en pivot des volets. Cette charnière a comme unique fonction d'assurer le pivot des volets (2Va) et (2Vf), et non une fonction antivol. C'est pourquoi, si un voleur souhaitait détériorer la charnière (2Vac), le deuxième mode de réalisation de l'invention resterait quand même verrouillé, car aucun mouvement de translation ne peut être fait entre (2Va) et (2Vf), verrouillés par le cadenas (Cd).

Le système, de par sa conception, bloque complètement les leviers de commande de translation de la minipelle mécanique ou de l'engin de chantier, qui ne peut plus avancer et donc ne peut plus être dirigé.

De plus, les matériaux utilisés pour les deux modes de réalisation peuvent être réalisés dans des aciers durs, pour réduire le temps de tronçonnage et de cisaillement des ensembles.

Ces deux modes de réalisation sont prévus pour retarder le vol par dégradation de la minipelle mécanique ou de l'engin à protéger.

Les vis pointeau (Vp) sont prévues pour bloquer les manchons (1Ma), (1Mp) et (2Ma) sur les leviers de commande (Lc). En effet, lors du serrage de (Vp), celles-ci pénètrent dans la matière du levier (Lc). Ainsi, les manchons (1Ma), (1Mp) et (2Ma) sont solidaires des leviers de commande (Lc). En étant solidaires à (Lc), les manchons (1Ma), (1Mp) et (2Ma) ne peuvent pas glisser, même sous l'action de coups de type marteau, ne laissant pas la possibilité de donner de l'amplitude aux leviers de commande (Lc) et donc de conduire un minimum la minipelle mécanique.

Pour l'autre mode de réalisation, les manchons (2Ma) ont trois vis pointeau (Vp), pour assurer une meilleure coaxialité du manchon (2Ma) avec le tube du levier de commande de translation (Lc) sur lequel (2Ma) sera fixé. Dans tous les cas, une fois le système monté et verrouillé, il n'est pas possible d'accéder aux vis pointeau (Vp) et donc de les dévisser, sans une détérioration importante.

Dans le cas du premier mode de réalisation, les manchons (1Ma) et (1Mp) n'ont qu'une seule vis pointeau (Vp), positionnée de telle façon qu'une fois le système verrouillé avec le cadenas (Cd), celui-ci n'est plus accessible et donc pas dévissable sans une détérioration importante.

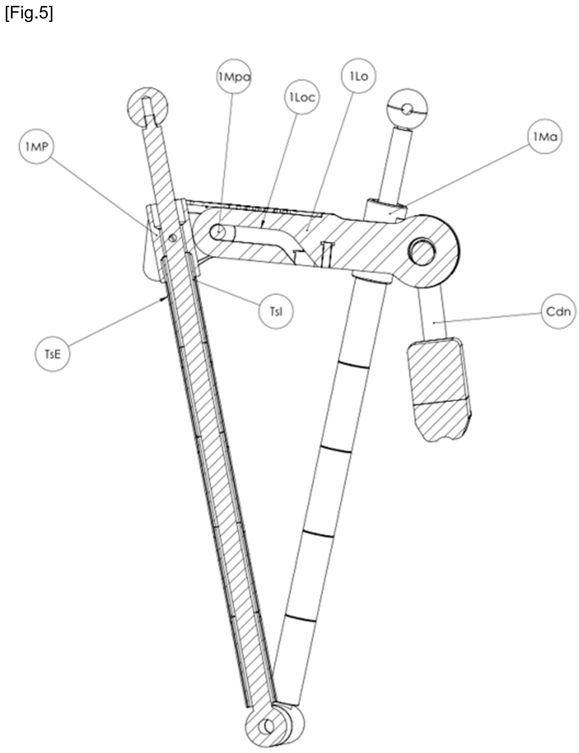

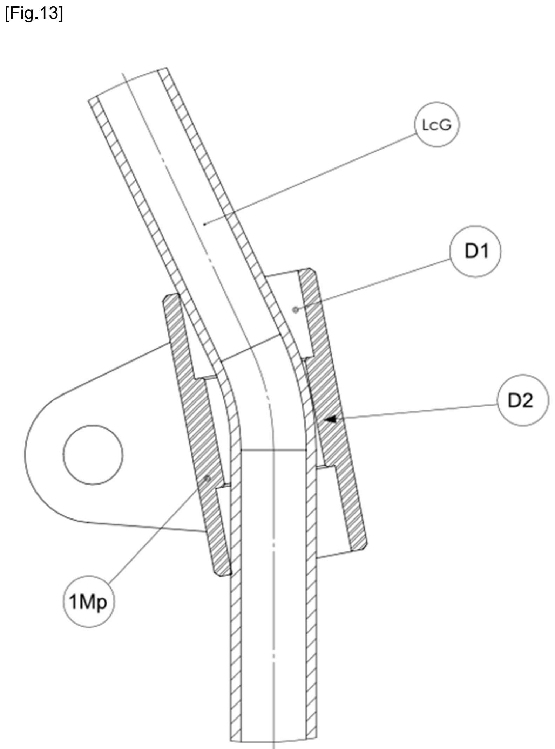

Ces deux modes de réalisation sont compatibles avec les leviers de commandes de translation (Lc) des pelles mécaniques et minipelles mécaniques du marché. Cette compatibilité ne nécessite aucun réglage ni aucune pièce spécifique supplémentaire. Cette compatibilité est due à la forme spécifique des manchons. Pour le premier mode de réalisation, les manchons (1Ma), (1Mp), figure 5, ont une forme cylindrique à deux diamètres différents (D1) et (D2), figure 13. (D2), le plus petit diamètre, est supérieur au plus gros diamètre de levier de commande de translation du marché, et le grand diamètre intérieur (D1) des manchons (1Ma), (1Mp) permet de passer le cintre du levier de commande (LcG). De par cette particularité, (1Ma) et (1Mp) sont compatibles avec tous les angles de cintre des leviers de commandes de translation des pelles mécaniques et minipelles mécaniques du marché, figure 13.

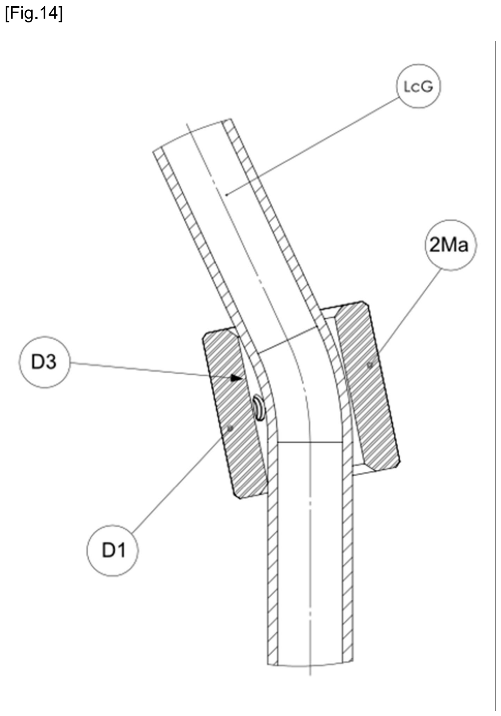

Pour l'autre mode de réalisation, (2Ma), figure 14, le diamètre intérieur (D3) est supérieur au plus gros diamètre de levier de commande de translation du marché (LcG), mais aussi suffisamment grand pour pouvoir passer les cintres des leviers de commande de translation (Lc) des pelles mécaniques et minipelles mécaniques. Pour favoriser ces passages, (2Ma) a aussi une petite longueur, figure 14. De par cette particularité, les manchons (2Ma) sont compatibles avec tous les angles de cintres des leviers de commandes de translation des pelles mécaniques et minipelles mécaniques du marché, figure 14.

De plus, cette compatibilité est aussi due aux formes spécifiques du premier mode de réalisation pour la pièce loquet (1Lo) et du deuxième mode de réalisation avec les pièces volets (2Vf) et (2Va) qui, suivant l'écartement des leviers de commandes de translation (Lc), peuvent s'aligner pour pouvoir insérer un cadenas, figures 5, 6, 8, 9 et 10.

Le verrouillage du premier mode de réalisation, figure 5, montre le système verrouillé et assemblé sur les leviers de commande de translation (Lc), avec le crochet (1Loc) crocheté sur l'axe (1Mpa) du manchon (1Ma). Ainsi assemblé, le loquet ne peut être retiré sans une détérioration importante.

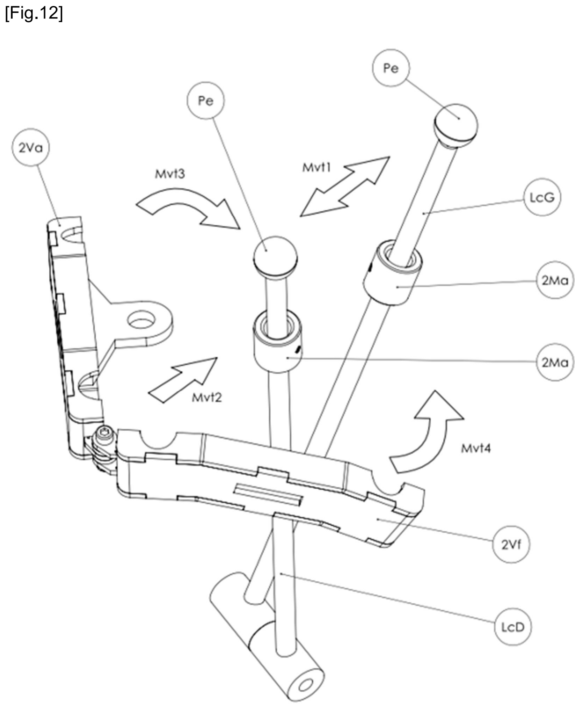

Les deux modes de réalisation apportent une très bonne ergonomie d'utilisation et une rapidité de mise en place, ce qui est primordial pour un usage quotidien, de par les mouvements d'assemblage en figures 3 et 12.

Les manchons (1Ma), (1Mp) et (2Ma) peuvent rester fixés aux leviers de commandes de translation (Lc), sans gêner leur utilisation ni la conduite de l'engin de chantier ou engin de manutention, type minipelle mécanique et pelle mécanique.

Lors d'un chantier, les engins de travaux publics restent sur place la nuit et le week-end, sont peu sécurisés et sont souvent la cible de vols. Un utilisateur de minipelle mécanique, par exemple, souhaite le soir, après sa journée de travail, sécuriser sa machine pour la nuit ou le week-end.

Pour cela, dans le cas du premier mode de réalisation, l'utilisateur pourra prendre le loquet (1Lo), qui était stocké dans une mallette par exemple, écarter au maximum les leviers de commande de translation (Lc), les maintenir ouverts soit avec les commandes au pied soit avec les genoux, et crocheter le loquet (1Lo) dans le manchon (1Ma). Une fois crocheté, maintenir le loquet d'une main et, avec l'autre main, passer le cadenas ouvert (Cd) dans l'anneau du manchon (1Ma) et dans l'anneau du loquet (1Lo). Finaliser la mise en sécurité en refermant le cadenas (Cd). L'ensemble du premier mode de réalisation est ainsi sécurisé.

Pour retirer le système de protection contre le vol, il suffit de refaire les opérations en sens inverse. Une fois le loquet (1Lo) et le cadenas (Cd) retirés, ceux-ci peuvent être rangés dans une mallette et placés dans un espace de rangement dans la cabine de la minipelle, par exemple.

Le montage et le démontage du premier mode de réalisation du système prennent quelques secondes, ce qui le rend rapide et facile d'utilisation.

Dans le cas de l'utilisation de l'autre mode de réalisation, l'utilisateur pourra prendre les volets (2V), qui sont stockés dans une mallette par exemple, écarter au maximum les leviers de commande de translation (Lc), les maintenir ouverts soit avec les commandes au pied soit avec les genoux, et refermer les volets (2Vf) et (2Va) sur les manchons (2Ma). Une fois refermés, maintenir les volets (2V) d'une main et, de l'autre, passer le cadenas ouvert (Cd) dans l'anneau du volet (2Va). Finaliser la mise en sécurité en refermant le cadenas (Cd). L'ensemble du deuxième mode de réalisation est ainsi sécurisé.

Pour retirer le système, il suffit de refaire les opérations en sens inverse. Une fois les volets (2V) et le cadenas (Cd) retirés, ceux-ci peuvent être rangés dans une mallette et placés dans un espace de rangement dans la cabine de la minipelle, par exemple.

Le montage et le démontage du deuxième mode de réalisation du système prennent quelques secondes, ce qui le rend rapide et facile d'utilisation
De par sa conception, comme par exemple, avec de nombreuses pièces découpées laser, pliées, soudés et peintes, et des ensembles simples à assemblés, fait de ces systèmes, des ensembles industrialisables.

L'utilisation du système se fait de la façon suivante. Avant la première utilisation, le système doit être ajusté avec les leviers de commande de translation (Lc) de la minipelle mécanique ou de tout autre engin de chantier. Les deux leviers de commande de translation (Lc) sont composés de (LcD) pour le levier de commande de translation droit et (LcG) pour le levier de commande de translation gauche des engins de chantier et engins de manutention, type minipelle mécanique et pelle mécanique.

Tous les leviers de commandes de translation des engins de chantier, type minipelles mécaniques et pelles mécaniques, sont de formes et de dimensions différentes. Leurs usages sont les mêmes, mais les diamètres des leviers, leurs écartements ou bien l'angle maximum que les leviers peuvent prendre l'un par rapport à l'autre sont différents. C'est pourquoi le système nécessite un ajustement pour son bon fonctionnement. Une fois ajusté et assemblé aux leviers de commande, le système peut être repositionné sans aucun réglage préalable.

Une fois le système installe sur les leviers de commande de translation, l'engin de chantier, type minipelle mécanique et pelle mécanique, est sécurisé. Toutefois, un voleur malveillant pourrait couper les leviers de commande de translation (Lc) à l'aide d'une disqueuse, par exemple, ou de tout autre procédé de découpe portatif, juste en dessous du système de protection contre le vol. Ainsi, ce voleur pourrait conduire l'engin de chantier, type minipelle mécanique et pelle mécanique, avec des leviers de commande de translation (Lc) raccourcis.

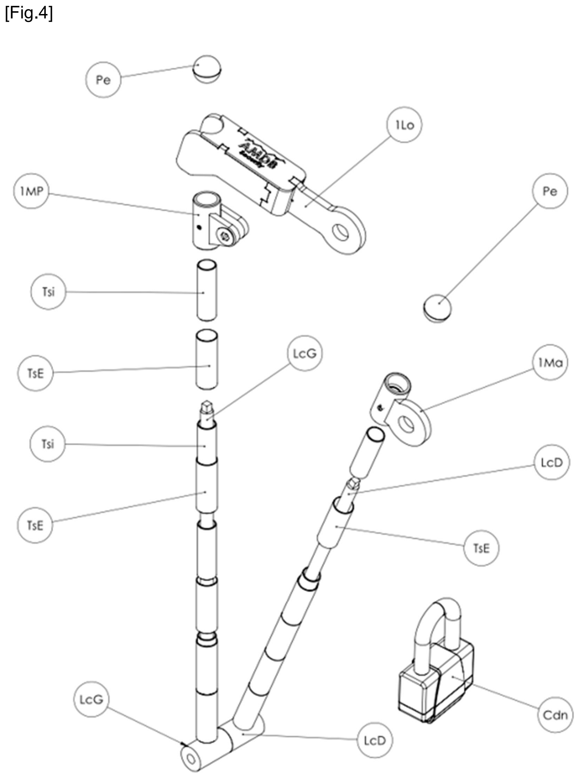

Pour éviter cela, l'utilisateur du système peut installer les tubes de protection (Tse) pour le tube de sécurité extérieur et (Tsi) pour le tube de sécurité intérieur, qui seront assemblés sur les leviers de commande de translation (Lc), après démontage des poignées ergonomiques (Pe), figure 4. Le principe de fonctionnement est le suivant : lorsque les voleurs souhaiteront découper les leviers de commande de translation (Lc) avec une disqueuse, par exemple, le premier tube extérieur (Tse) pourra être coupé avec la disqueuse, mais lorsque le disque de la disqueuse touchera le tube intérieur (Tsi), celui-ci tournera sur son axe, celui du tube du levier de commande de translation (Lc), entraîné comme un engrenage, et ralentira ainsi grandement le vol.

Les tubes de sécurité (Tse) et (Tsi) ont des longueurs différentes, pour éviter que le disque de la tronçonneuse puisse couper dans les jointures entre (Tse) et (Tsi) et attaquer les leviers de commande de translation (Lc).

De plus, les tubes de sécurité (Tse) et (Tsi) sont de petites longueurs, afin de pouvoir passer les cintres éventuels des leviers de commande de translation (Lc), suivant les différents modèles de pelles mécaniques et minipelles mécaniques, ou de tout autre engin de chantier et engin de manutention.

Une fois les tubes de sécurité (Tse) et (Tsi) assemblés et mis en place, ceux-ci serviront de référence de positionnement pour les manchons des deux modes de réalisation, que ce soit (1Ma), (1Mp) ou (2Ma), qui seront mis en appui sur le tube (Tse) ou (Tsi) le plus haut. Le nombre de tubes de sécurité (Tse) et (Tsi) dépendra de chaque modèle de pelle mécanique et de minipelle mécanique.

Dans le cas où l'utilisateur ne souhaite pas utiliser les tubes de sécurité (Tse) et (Tsi), les manchons des deux modes de réalisation, que ce soit (1Ma), (1Mp) ou (2Ma), seront positionnés sur les leviers de commande de translation (Lc) à une dimension spécifique et adéquate, suivant les différents modèles de pelles mécaniques et minipelles mécaniques.

Pour l'utilisation du premier mode de réalisation du système selon l'invention, que ce soit avec l'utilisation des tubes de sécurité (Tse) et (Tsi) ou sans, dans un premier temps, le retrait des poignées ergonomiques (Pe) des leviers de commande (Lc) est nécessaire. Une fois les poignées ergonomiques (Pe) retirées, installer le manchon (1Mp) en le faisant glisser le long du tube du levier de commande (LcG) ou (LcD) et en le mettant à la hauteur préconisée pour cette minipelle mécanique. Bloquer le manchon (1Mp) avec la vis pointeau (Vp). Le manchon (1Mp) peut être monté sur la commande de gauche ou celle de droite, suivant la préférence de l'utilisateur. Sur le deuxième levier de commande de translation (Lc), faire la même opération avec le manchon (1Ma), le positionner à la hauteur et à la position préconisées. Une fois le positionnement réalisé, bloquer le manchon (1Ma) avec la vis pointeau (Vp). Les manchons (1Ma) et (1Mp) resteront fixés sur les leviers de commande (Lc), sans gêner la manipulation de ceux-ci ni la conduite de l'engin de chantier, type pelle mécanique ou minipelle mécanique.

Pour l'utilisation du système suivant la figure 3, écarter au maximum les leviers de commande (Lc) suivant le mouvement (Mvt1), crocheter le loquet (1Lo) sur le manchon (1Mp) avec le mouvement (Mvt2), pivoter le loquet (1Lo) suivant le mouvement (Mvt3), aligner le trou de l'anneau du loquet (1Lo) avec le trou de l'anneau du manchon (1Ma) et y glisser un cadenas (Cd) pour verrouiller l'ensemble.

Une fois le système assemblé, aucun mouvement des leviers de commande de translation (Lc) n'est possible sans détériorations importantes, ce qui ne va pas dans le sens du vol, celui-ci devant se faire en un minimum de temps.

Le déverrouillage du système de sécurité du premier mode de réalisation du système se fait avec les opérations inverses : on retire le cadenas (Cd), puis on décroche le loquet (1Lo) du manchon (1Mp), dans le sens inverse du mouvement (Mvt3), figure 3. Ainsi, les leviers de commandes de translation (Lc) sont libérés et peuvent être manipulés.

Pour l'utilisation du deuxième mode de réalisation du système, que ce soit avec l'utilisation des tubes de sécurité (Tse) et (Tsi) ou sans, dans un premier temps, le retrait des poignées ergonomiques (Pe) des leviers de commande (Lc) est nécessaire. Une fois les poignées ergonomiques (Pe) retirées, installer le premier manchon (2Ma) en le faisant glisser le long du tube de levier de commande de translation (Lc) et en le mettant à la hauteur préconisée pour cette pelle mécanique ou minipelle mécanique, ou bien en butée des tubes de protection (Tse) et (Tsi) dans le cas de leur utilisation préalable. Une fois positionné, bloquer le manchon (2Ma) avec les trois vis pointeau (Vp). Répéter l'opération avec le deuxième manchon (2Ma) sur le second levier de commande de translation (Lc). Une fois le positionnement réalisé, bloquer le manchon (2Ma) avec les trois vis pointeau (Vp). Les deux manchons (2Ma) resteront fixés sur les leviers de commande (Lc), sans gêner la manipulation de ceux-ci ni la conduite de la pelle mécanique ou minipelle mécanique, figures 10 et 11.

Pour l'utilisation du système suivant la figure 12, écarter au maximum les leviers de commande (Lc) suivant le mouvement (Mvt1), approcher les volets ouverts (2Va) et (2Vf) suivant le mouvement (Mvt2). Arrivé en butée sur le premier manchon (2Ma), refermer les volets (2Vf) et (2Va) suivant les mouvements (Mvt3) et (Mvt4), jusqu'au contact de l'un contre l'autre. La partie saillante avec un anneau du volet (2Va) entre dans la fente du volet (2Vf), permettant ainsi d'y introduire un cadenas (Cd) pour verrouiller l'ensemble, figures 8 et 9.

Une fois le système assemblé, aucun mouvement des leviers de commande de translation (Lc) n'est possible sans détériorations importantes, ce qui ne va pas dans le sens du vol, celui-ci devant se faire en un minimum de temps.

Le déverrouillage du système de sécurité du deuxième mode de réalisation du système se fait avec les opérations inverses : retrait du cadenas (Cd), puis ouverture des volets (2Va) et (2Vf) suivant le mouvement inverse de (Mvt3) et (Mvt4).

Les leviers de commandes de translation (Lc) sont fixés au plancher de l'engin de chantier, de type minipelle mécanique ou pelle mécanique, par des vis. Ces leviers de commandes de translation peuvent être couplés avec des pédales à pied, directement fixées aux leviers (Lc). Afin d'éviter que (Lc) soit démonté en dévissant ces vis, celles-ci pourraient être réalisées avec des têtes antivol.

## Revendications

1. Système de protection contre le vol pour engins de chantier, **caractérisé en ce qu'**il comprend :
- au moins deux manchons (1Ma, 1Mp, 2Ma) destinés à être fixés sur des leviers de commandes de translation (LcG, LcD) d'un engin de chantier type minipelle mécanique ou pelle mécanique,
- des moyens de fixation des manchons comprenant au moins une vis pointeau (Vp) destinée à être en contact avec les leviers de commandes de translation pour rendre les manchons solidaires desdits leviers,
- des moyens de verrouillage reliant les manchons entre eux pour maintenir les leviers de commandes de translation en position maximum écartée.

2. Système selon la revendication 1, dans lequel les moyens de verrouillage comprennent un loquet (1Lo) destiné à coopérer avec un manchon pivot (1Mp) et un manchon avec anneau (1Ma).

3. Système selon la revendication 2, dans lequel le loquet (1Lo) est mobile en rotation et comprend un crochet (1Loc) destiné à s'engager sur un axe (1Mpa) du manchon pivot (1Mp).

4. Système selon la revendication 1, dans lequel les moyens de verrouillage comprennent un verrou (2V) composé d'un volet fendu (2Vf) et d'un volet avec anneau (2Va) reliés par une charnière (2Vc).

5. Système selon la revendication 4, dans lequel les volets (2Vf, 2Va) sont configurés pour entourer les manchons (2Ma) fixés sur les leviers de commandes de translation.

6. Système selon l'une quelconque des revendications précédentes, dans lequel lesdits moyens de verrouillage sont verrouillables par un cadenas (Cd).

7. Système selon l'une quelconque des revendications précédentes, dans lequel les manchons (1Ma, 1Mp) présentent une forme cylindrique à deux diamètres différents (D1, D2), le diamètre intérieur le plus petit (D2) étant supérieur au plus gros diamètre de levier de commande de translation.

8. Système selon l'une quelconque des revendications 1 à 6, dans lequel les manchons (2Ma) comprennent trois vis pointeau (Vp) par manchon pour assurer une meilleure coaxialité avec les leviers de commandes de translation.

9. Système selon l'une quelconque des revendications précédentes, dans lequel le système comprend en outre des tubes de sécurité (Tse, Tsi) destinés à être assemblés sur les leviers de commandes de translation pour protéger ceux-ci contre la découpe volontaire.

10. Engin de chantier type minipelle mécanique ou pelle mécanique, **caractérisé en ce qu'**il comprend un système de protection contre le vol selon l'une quelconque des revendications 1 à 9.
